# FASCICULE DE BREVET EUROPEEN

(11) **EP 3 734 101 B1**
(45) Date de publication et mention de la délivrance du brevet: **06.12.2023**
(21) Numéro de dépôt: 20168563.3
(22) Date de dépôt: 07.04.2020
(51) Int. Cl.: F16D 13/64

(54) **DISPOSITIF DE PROGRESSIVITE POUR DISQUE D'EMBRAYAGE A FRICTION ET DISQUE D'EMBRAYAGE A FRICTION INTEGRANT UN TEL DISPOSITIF**
PROGRESSIVE VORRICHTUNG FÜR EINE REIBUNGSKUPPLUNGSSCHEIBE UND REIBUNGSKUPPLUNGSSCHEIBE UMFASSEND EINE SOLCHE VORRICHTUNG
PROGRESSIVE DEVICE FOR A FRICTION CLUTCH DISC AND FRICTION CLUTCH DISC COMPRISING SUCH DEVICE

(30) Priorité: 30.04.2019 FR 1904564
(43) Date de publication de la demande: 04.11.2020
(73) Titulaire: VALEO EMBRAYAGES, 80009 Amiens (FR)
(72) Inventeur: VASSIEUX, LOIC, 95892 CERGY PONTOISE (FR); LHEUREUX, Dominique, 95892 CERGY PONTOISE (FR); REGULSKI, Bernard, 95892 CERGY PONTOISE (FR)
(74) Mandataire: Valeo Powertrain Systems

(56) Documents cités:
- EP-A1- 3 036 451
- EP-B1- 3 036 451
- WO-A1-2018/096119
- FR-A1- 2 724 996
- FR-A1- 3 044 372

## Description

La présente invention se rapporte à un dispositif de progressivité pour disque d'embrayage à friction pour véhicule automobile. Le véhicule automobile peut être un véhicule dit industriel, ce dernier étant par exemple un poids lourd, un véhicule de transport en commun, ou un véhicule agricole.

Plus précisément, l'invention concerne un perfectionnement aux embrayages du type comprenant un disque d'embrayage à friction monté sur l'arbre d'entrée de la boîte de vitesses et venant en appui sur un volant moteur en position embrayée. Un mécanisme d'embrayage fixé sur le volant moteur, autrement appelé volant d'inertie, applique un effort de serrage sur le disque d'embrayage de manière à transmettre le couple produit par le moteur.

Les disques d'embrayage à friction comprennent, de façon traditionnelle, des garnitures de friction annulaires ou des plots de friction en forme de segments fixés sur un support, lui-même rapporté sur un voile de transmission de couple. Les plots de friction sont généralement du type métallo-céramique.

Deux rondelles de guidage disposées de part et d'autre du voile sont montées sur un moyeu central solidaire de l'arbre mené de la boîte de vitesses. Des ressorts hélicoïdaux de compression sont disposés circonférentiellement entre les rondelles de guidage et le voile. La transmission du couple et la filtration des acyclismes moteur se fait par compression et relâchement successifs des ressorts.

Lors de la phase de ré-embrayage, il est nécessaire que la transmission du couple soit la plus progressive possible. Le mécanisme d'embrayage vient alors appliquer un effort axial de compression croissant sur le dispositif de progressivité jusqu'à la transmission complète du couple moteur.

Or, pendant cette phase, les plots de friction en forme de segments sont fortement sollicitées et ont tendance à se déformer de manière non contrôlée en créant alors des discontinuités dans la transmission du couple qui s'accompagnent d'un phénomène de broutement avec des à-coups très inconfortables et préjudiciables à la conduite du véhicule.

Il existe déjà des dispositifs de progressivité comprenant des plots de friction en forme de segments tels que celui décrit, notamment, dans la demande de brevet EP3036451 A1.

Ce document divulgue un disque d'embrayage à friction comprenant notamment un amortisseur de vibration torsionnelle et un dispositif de progressivité. Le dispositif de progressivité est formé par des plots de friction en forme de segment et fixés sur des pales de progressivité associées deux par deux, chacune des pales de progressivité étant rapportée sur la périphérie d'un voile de transmission de couple.

La progressivité du dispositif est assurée par l'empilement axial de deux pales, l'une servant de support et l'autre ayant un pli se déformant radialement lorsque le mécanisme d'embrayage est fermé. Cependant, cette configuration n'est toujours pas satisfaisante car elle ne permet pas de résoudre efficacement les problèmes techniques évoqués précédemment.

Les inconvénients associés à ce dispositif de progressivité sont liés au nombre restreint de plots de friction qui ne permet pas de garantir une durabilité de l'embrayage suffisante. La surface de friction étant segmentée, la pression de contact est supérieure à celle normalement présente lorsque la surface de friction est annulaire. L'usure des faces de frottement du disque d'embrayage à friction est donc augmentée.

Le nombre de plis disponibles sur les pales de progressivité est également limité de sorte que la raideur globale du dispositif de progressivité est élevée. Le confort du véhicule est ainsi dégradé.

L'invention vise à remédier à ces problèmes techniques en proposant un dispositif de progressivité perfectionné avec des pales de progressivité dont la déformation est maîtrisée en supprimant ou tout au moins en limitant fortement les risques de faux parallélisme des plots de friction lors des phases de ré-embrayage. Le document FR 2724996 montre également un dispositif de progressivité pour un disque d'embrayage à friction.

Dans ce but, l'invention propose un dispositif de progressivité pour un disque d'embrayage à friction, comprenant :
un voile de support à axe central de rotation X dans lequel une partie centrale annulaire est adaptée à coopérer avec un amortisseur de vibration torsionnelle et
une partie externe porte des pales de progressivité, lesdites pales de progressivité s'étendant circonférentiellement entre une zone de coopération de la partie externe du voile de support et une extrémité libre,
et des plots de friction disposés circonférentiellement sur les deux faces du voile de support, répartis sur la partie externe du voile de support, chaque plot de friction ayant une forme de segment angulaire ,
dans lequel, sur une des faces du voile de support, chacun des plots de friction est fixé par deux pales de progressivité adjacentes et chaque plot de friction recouvre la zone de coopération du voile de support située entre les deux pales de progressivité.

Ce dispositif de progressivité, selon l'invention, présente l'avantage, grâce à la disposition des plots de friction sur le voile de support d'augmenter la surface de friction du disque d'embrayage à friction et donc d'améliorer la durabilité de l'embrayage.

Ce dispositif de progressivité, selon l'invention, présente l'avantage, grâce à la fixation des plots de friction sur deux pales de progressivité adjacentes de réduire les défauts géométriques d'assemblage et de d'augmenter les points de fixation de sorte que la tenue à la centrifugation du disque d'embrayage à friction est améliorée. Etant donné que les plots de friction d'une même face du voile de support sont fixés par deux pales de progressivité adjacentes, la tenue mécanique du dispositif de progressivité est améliorée.

Avantageusement, sur l'autre face du voile de support, chacun des plots de friction est fixé par deux zones de coopération adjacentes du voile de support et chaque plot de friction recouvre la pale de progressivité située entre les deux zones de coopération. De cette manière, la répartition des plots de friction sur les deux faces du voile de support est identique et contribue à ainsi à améliorer la durabilité de l'embrayage.

Avantageusement, la zone de coopération s'étend radialement depuis la partie centrale annulaire jusqu'à la partie externe du voile de support.

De préférence, la partie centrale et le diamètre extérieur de la partie externe du voile de support sont décalés radialement, le décalage radial est au moins égal à la largeur d'une pale de progressivité. De cette manière, la résistance mécanique du voile de support et des pales de progressivité est améliorée étant donné que la surface de coopération entre ces éléments est agrandie.

De préférence, les plots de friction adaptés à coopérer avec une face de friction d'un plateau de pression de mécanisme d'embrayage sont fixés sur les pales de progressivité et les plots de friction adaptés à coopérer avec une face de friction d'un volant d'inertie d'un système de transmission sont fixés sur les zones de coopération du voile de support. De cette manière, la progressivité du dispositif est orientée en direction du mécanisme d'embrayage et contribue ainsi à améliorer le confort du véhicule.

Avantageusement, le dispositif de progressivité comporte deux faces de frottement formées chacune par une pluralité de plots de friction.

L'invention peut présenter l'une ou l'autre des caractéristiques décrites ci-dessous combinées entre elles ou prises indépendamment les unes des autres :
- les zones de coopération peuvent être planes et situées dans le même plan que la partie centrale du voile de support ;
- le plot de friction peut être formé en matériau métallo-céramique, ou en fritté, ou en matériau organique ;
- le nombre de plots de friction par face de frottement peut être compris entre 3 et 12 ;
- les plots de friction peuvent être fixés par des rivets de fixation ou par soudure ;
- chacun des plots de friction d'une même face de frottement peut recouvrir angulairement et en partie deux plots de friction de la face de frottement opposée ;
- le plot de friction peut être collé sur un clinquant intercalaire ;
- le plot de friction peut être collé sur un premier clinquant intercalaire et un deuxième clinquant intercalaire, les premier et deuxième clinquants étant distincts, le premier des clinquants venant en appui sur une première pale de progressivité et le deuxième des clinquants venant en appui sur une deuxième pale de progressivité ;
- le clinquant peut comprendre des trous de passage de rivets de fixation du plot sur le voile de support et le plot de friction associé peut comprendre des lumières agencées pour le passage des rivets de fixation ;
- les lumières du plot de friction peuvent être de formes oblongues ;
- chacune des pales de progressivité peut comprendre une zone de support plane décalée axialement par rapport à la partie centrale du voile de support et la zone de support peut comprendre des orifices, une partie des orifices étant dédiés à la fixation d'un premier plot de friction, l'autre partie des orifices étant dédiés à la fixation d'un deuxième plot de friction. Par exemple, la zone de support peut comprendre quatre orifices, deux des orifices étant dédiés à la fixation d'un premier plot de friction, les deux autres orifices étant dédiés à la fixation d'un deuxième plot de friction ;
- les orifices de la zone de support peuvent accueillir des rivets de fixation des plots de friction sur les pales de progressivité ;
- les plots de friction peuvent être fixés ensemble sur une tôle annulaire, ladite tôle annulaire étant en appui directement sur les zones de support planes des pales de progressivité ;
- l'extrémité libre de la pale de progressivité peut être retenue axialement par rapport au voile de support par l'intermédiaire d'un moyen de retenue lorsque le dispositif de progressivité est libéré de tout effort axial de compression ;
- le moyen de retenue peut comprendre un rivet épaulé fixé sur le voile de support coopérant avec l'extrémité libre d'une première pale de progressivité, la première pale de progressivité venant en appui sur l'épaulement du rivet lorsque le dispositif de progressivité est libéré de tout effort axial de compression ;
- le rivet épaulé peut fixer une deuxième pale de progressivité sur le voile de support, la deuxième pale de progressivité étant adjacente à la première pale de progressivité ;
- le moyen de retenue peut comprendre une patte repliée depuis l'extrémité libre de la pale de progressivité et introduite dans une ouverture aménagée dans le voile de support, la patte repliée venant en appui sur le voile de support lorsque le dispositif de progressivité est libéré de tout effort axial de compression ;
- le moyen de retenue peut comprendre une patte repliée formée depuis une première pale de progressivité et qui recouvre axialement une deuxième pale de progressivité, l'extrémité libre de la deuxième pale de progressivité venant en appui sur la patte repliée de la première pale de progressivité lorsque le dispositif de progressivité est libéré de tout effort axial de compression.

L'invention a également pour objet, selon un autre de ses aspects, un dispositif de progressivité reprenant tout ou partie des caractéristiques mentionnées précédemment et dans lequel les pales de progressivité sont issues de matière avec le voile de support à partir de la zone de coopération.

De préférence, la pale de progressivité peut comprendre sur son extrémité libre une zone de support conjointe à deux plots de friction.

Cet autre aspect de l'invention présente l'avantage de simplifier l'assemblage du dispositif de progressivité étant donné que le nombre de composants à assembler est réduit. Les défauts géométriques d'assemblage sont réduits grâce à la fixation des plots de friction sur deux pales de progressivité adjacentes.

Avantageusement, la liaison de la pale de progressivité avec la zone de coopération peut se faire selon un pli s'étendant radialement jusqu'au diamètre extérieur de la partie externe, le pli étant situé circonférentiellement entre la zone de support et la zone de coopération.

De préférence, le pli peut s'étendre dans une direction orthoradiale par rapport à l'axe central du voile de support de telle sorte que, sous contraintes d'appui, le pli s'écrase de façon isostatique.

Avantageusement, la zone de support peut être plane et comprendre quatre orifices, deux des orifices étant dédiés à un premier plot de friction, les deux autres orifices étant dédiés à un deuxième plot de friction, de sorte que la planéité de la face de frottement soit améliorée.

La zone de coopération peut comprendre un pliage additionnel s'étendant circonférentiellement dans le sens inverse de la pale de progressivité, de sorte que la raideur globale du dispositif de progressivité soit diminuée.

L'invention a également pour objet, selon un autre de ses aspects, un dispositif de progressivité reprenant tout ou partie des caractéristiques mentionnées précédemment et dans lequel les pales de progressivité sont rapportées et rivetées sur le voile de support au niveau de la zone de coopération.

De préférence, la pale de progressivité peut comprendre au moins deux plis de matière délimitant une zone de support conjointe à deux plots de friction, les deux plis s'étendant dans une direction orthoradiale par rapport à l'axe central du voile de telle sorte que, sous contraintes d'appui, les plis s'écrasent de façon isostatique.

Cet autre aspect de l'invention présente l'avantage d'améliorer la tenue mécanique et d'abaisser la raideur globale du dispositif de progressivité étant donné que le nombre de plis est augmenté. Les défauts géométriques d'assemblage sont réduits grâce à la fixation des plots de friction sur deux pales de progressivité adjacentes.

Avantageusement, la zone de support peut être plane et comprendre quatre orifices, deux des orifices étant dédiés à un premier plot de friction, les deux autres orifices étant dédiés à un deuxième plot de friction, de sorte que la planéité de la face de frottement soit améliorée.

De préférence, les plis d'une même pale de progressivité peuvent être parallèles entre eux et avoir une même raideur axiale.

Avantageusement, les plis peuvent avoir une même largeur et même hauteur et s'étendre de façon symétrique de part et d'autre de l'axe diamétral du voile de support.

Le voile de support peut présenter des échancrures dans les secteurs angulaires situés sous la zone de support des pales de progressivité, de sorte que l'inertie du dispositif de progressivité soit améliorée.

Les pales de progressivité peuvent être réalisées en tôle d'acier, les plis étant perpendiculaires au sens de laminage de la tôle.

L'invention a également pour objet, selon un autre de ses aspects, un disque d'embrayage à friction pour véhicule automobile, comprenant un voile de transmission de couple, deux rondelles de guidage disposées de part et d'autre dudit voile de transmission de couple, des ressorts hélicoïdaux de compression en appui sur le voile de transmission de couple et les rondelles de guidage, et un dispositif de progressivité reprenant tout ou partie des caractéristiques mentionnées précédemment, dans lequel le voile de support est porté soit par le voile de transmission de couple, soit par l'une des deux rondelles de guidage.

Le voile de support peut comprendre des échancrures ou des fenêtres entourant les ressorts hélicoïdaux de compression.

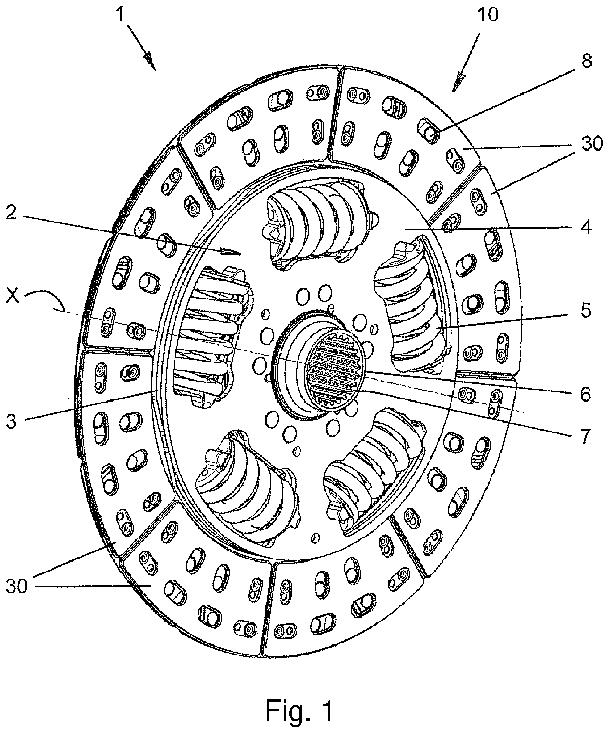

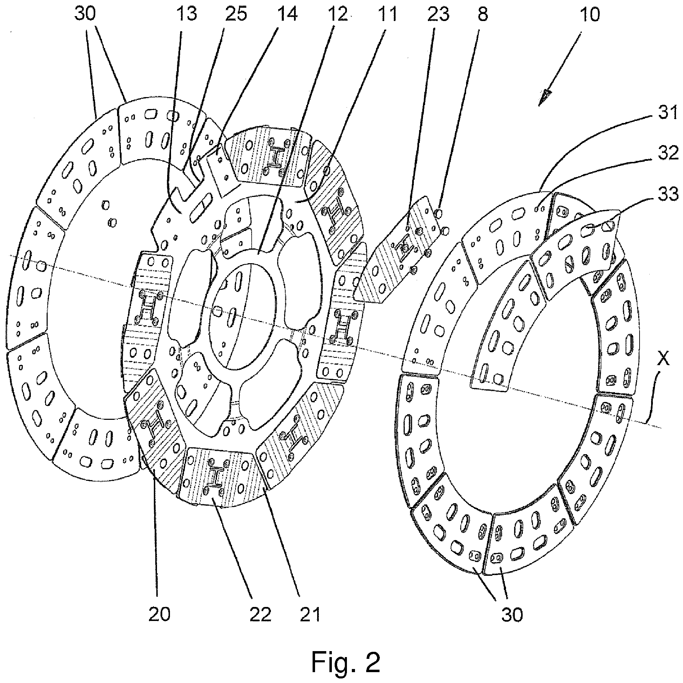

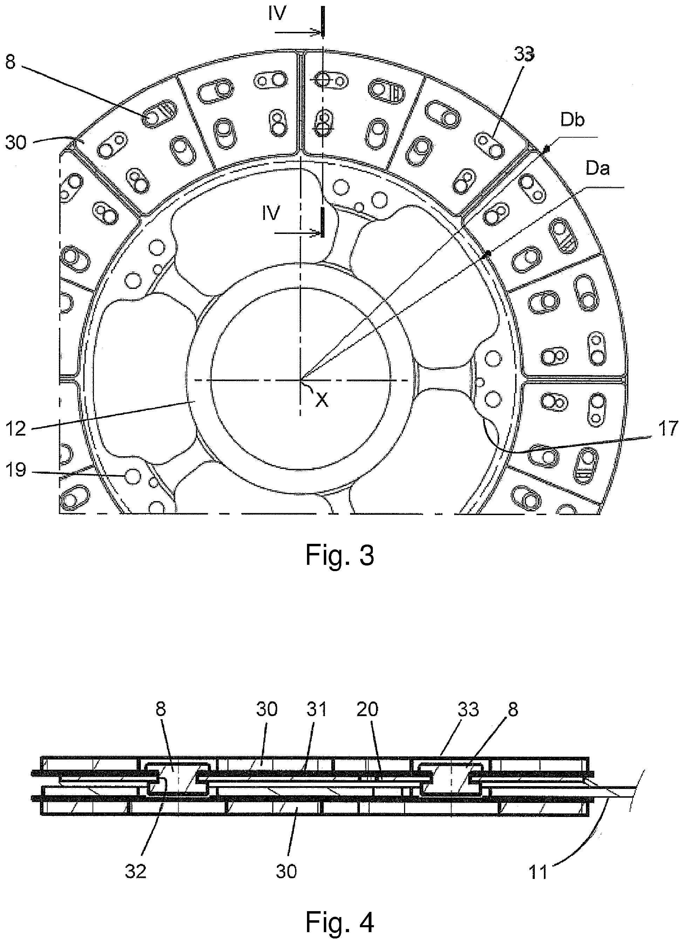

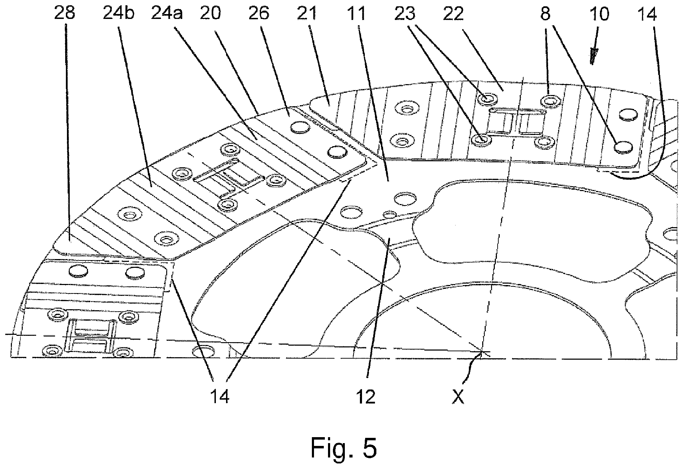

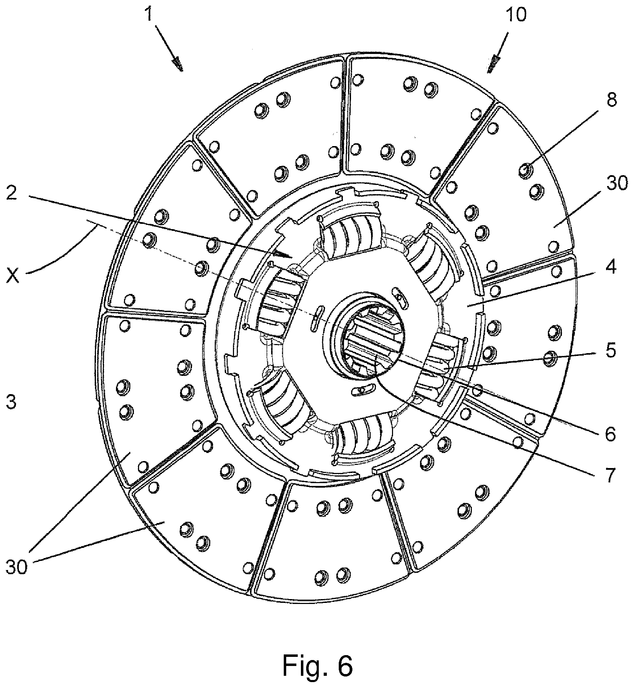

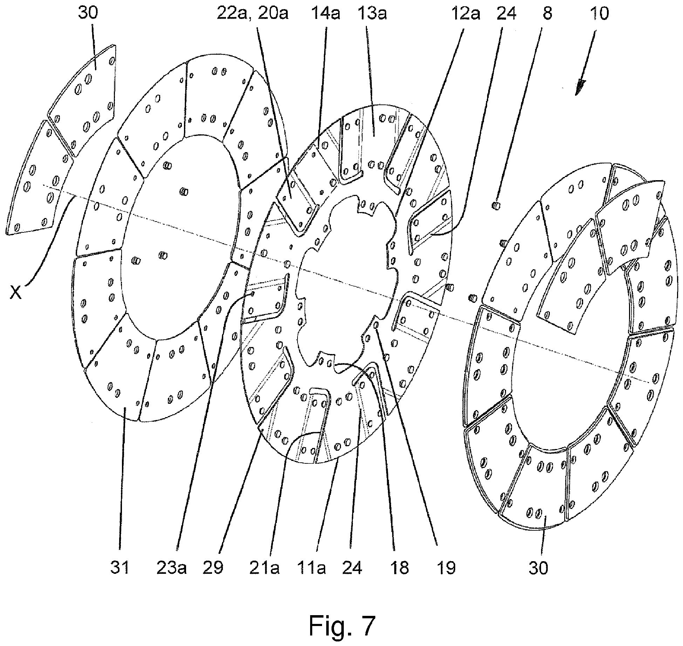

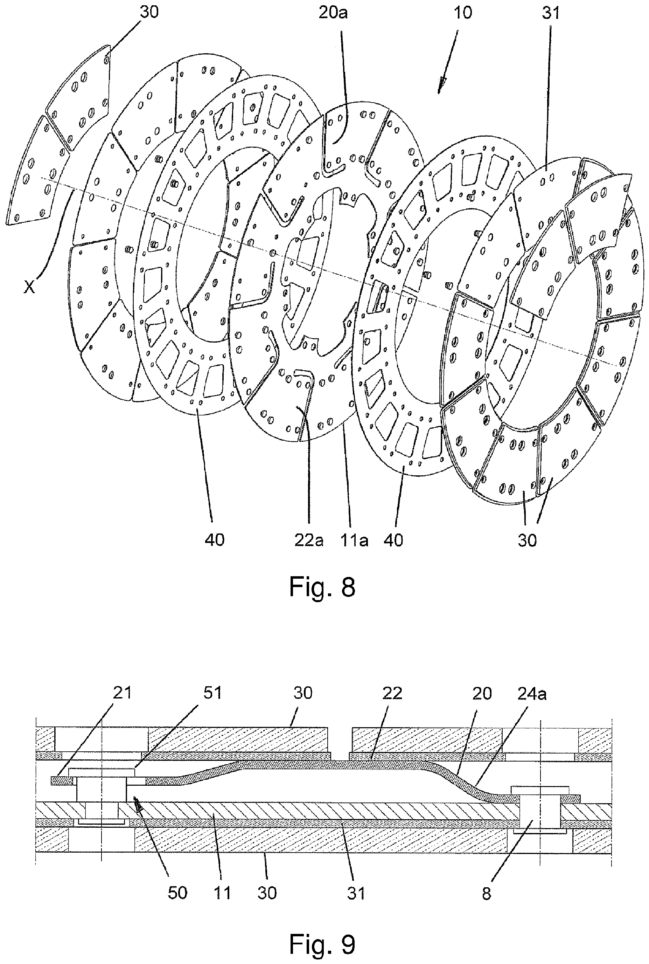

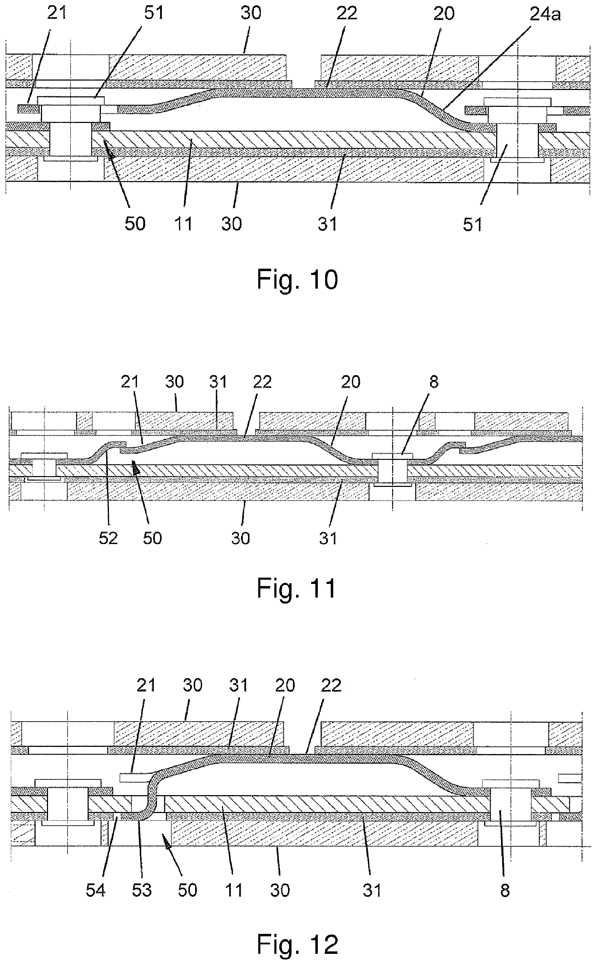

L'invention sera mieux comprise à la lecture de la description qui va suivre, donnée uniquement à titre d'exemple et faite en se référant aux dessins annexés dans lesquels :
- la figure [Fig. 1] est une vue isométrique d'un disque d'embrayage à friction intégrant un dispositif de progressivité selon un premier mode de mise en oeuvre de l'invention;
- la figure [Fig. 2] est une vue isométrique explosée du dispositif de progressivité selon le premier mode de mise en oeuvre de l'invention de la figure 1 ;
- la figure [Fig. 3] est une vue de face du dispositif de progressivité selon le premier mode de mise en oeuvre de l'invention de la figure 1 ;
- la figure [Fig. 4] est une vue en coupe du dispositif de progressivité selon le premier mode de mise en oeuvre de l'invention de l'invention de la figure 1 ;
- la figure [Fig. 5] est une vue partielle du dispositif de progressivité selon le premier mode de mise en oeuvre de l'invention de la figure 1 ;
- la figure [Fig. 6] est une vue isométrique d'un disque d'embrayage à friction intégrant un dispositif de progressivité selon un deuxième mode de mise en oeuvre de l'invention;
- la figure [Fig. 7] est une vue isométrique explosée du dispositif de progressivité selon le deuxième mode de mise en oeuvre de l'invention de la figure 6 ;
- la figure [Fig. 8] est une vue isométrique explosée d'un dispositif de progressivité selon un troisième mode mise en oeuvre proche du deuxième mode de mise en oeuvre de l'invention;
- la figure [Fig. 9] est une vue en coupe d'un dispositif de progressivité selon un quatrième mode de mise en oeuvre de l'invention de l'invention ;
- la figure [Fig. 10] est une vue en coupe d'un dispositif de progressivité selon un cinquième mode de mise en oeuvre de l'invention de l'invention ;
- la figure [Fig. 11] est une vue en coupe d'un dispositif de progressivité selon un sixième mode de mise en oeuvre de l'invention de l'invention ;
- la figure [Fig. 12] est une vue en coupe d'un dispositif de progressivité selon un septième mode de mise en oeuvre de l'invention de l'invention ;

Dans la suite de la description et des revendications, on utilisera à titre non limitatif et afin d'en faciliter la compréhension, les termes « avant » ou « arrière » selon la direction par rapport à une orientation axiale déterminée par l'axe O principal de rotation de la transmission du véhicule automobile et les termes « intérieur / interne » ou « extérieur / externe » par rapport à l'axe O et suivant une orientation radiale, orthogonale à ladite orientation axiale.

Les figures 1 et 5 illustrent un premier mode de mise en oeuvre d'un disque d'embrayage à friction 1 intégrant le dispositif de progressivité 10 selon l'invention.

Le disque d'embrayage à friction 1 d'axe de rotation X comprend un amortisseur de vibration torsionnelle 2 dans lequel on retrouve de manière traditionnelle un voile de transmission de couple 3, des rondelles de guidage 4 et des ressorts hélicoïdaux de compression 5. Le disque d'embrayage à friction présente dans le cas présent une architecture dites « symétrique » et comprend également un dispositif de progressivité 10 rapporté sur le voile de transmission de couple 3. Les deux rondelles de guidage 4 sont disposées de part et d'autre du voile de transmission de couple 3 en emprisonnant dans des logements intercalaires les ressorts hélicoïdaux de compression 5.

Un mécanisme d'embrayage fixé sur le volant moteur (non représenté) applique un effort de serrage sur le disque d'embrayage à friction 1 de manière à transmettre le couple produit par le moteur en direction de la boîte de vitesse.

Le couple moteur entre dans le disque d'embrayage par l'intermédiaire du dispositif de progressivité 10 et ressort par l'intermédiaire d'un moyen central 6 disposé entre les deux rondelles de guidage 4. Le moyeu central 6 est raccordé aux rondelles de guidage 4 par des rivets. Le moyeu central 6 est monté sur l'arbre mené de la boîte de vitesse (non représenté) et transmet le couple moteur par des cannelures 7 formées sur son alésage intérieur.

Comme illustré sur les figures 1 et 2, le dispositif de progressivité 10 comprend selon le premier mode de mise en oeuvre de l'invention un voile de support 11 d'axe de rotation central X porté par le voile de transmission de couple 3, des pales de progressivité 20 et des plots de friction 30 répartis angulairement sur le pourtour du voile de transmission de couple 3 selon l'axe X.

Le voile de support 11 comprend une partie centrale 12 annulaire adaptée à coopérer avec l'amortisseur de vibration torsionnelle 2 et une partie externe 13 portant les pales de progressivité 20. Les pales de progressivité 20 sont rapportées et s'étendent circonférentiellement autour du voile de support 11. Chacune des pales de progressivité est fixée sur une zone de coopération 14 du voile de support 11. La zone de coopération correspond à une partie du voile de support définie par une surface de forme sensiblement rectangulaire. Comme cela est illustré sur la figure 5, les zones de coopération 14 sont situées sur la partie externe 13 du voile de support 11. La pale de progressivité 20 s'étend circonférentiellement depuis cette zone de coopération jusqu'à une extrémité libre 21. On retrouve sur le voile de support 11, autant de zones de coopération 14 que de pales de progressivité 20.

La zone de coopération 14 s'étend radialement depuis la partie centrale 12 annulaire jusqu'à la partie externe 13 du voile de support. Le diamètre extérieur Da de la partie centrale est dans le cas présent situé radialement à l'intérieur des plots de friction. La partie centrale 12 et le diamètre extérieur Db de la partie externe du voile de support sont ainsi décalés radialement, le décalage radial est au moins égal à la largeur d'une pale de progressivité 20.

Le voile de support 11 comprend des fenêtres 17 qui entourent les ressorts hélicoïdaux de compression 5. Les fenêtres 17 sont formées sur la partie centrale 12. Le voile de support 11 est fixé sur le voile de transmission de couple 3 à l'aide de rivets (non représentés), les rivets étant insérés dans des trous 19 formés sur la partie centrale 12 et disposés angulairement entre les fenêtres 17.

Les plots de friction 30 ont une forme de segment angulaire et recouvrent intégralement les faces de frottement du disque d'embrayage à friction 1. Dans cet exemple, chacune des faces de frottement est formée par huit plots de friction 30 séparés. Afin d'augmenter la durabilité de l'embrayage, le plot de friction 30 est formé en matériau métallo-céramique. Cependant, le plot de friction pourrait être également formé en fritté, en céramique ou encore dans un matériau organique. Le plot de friction 30 est collé sur un clinquant intercalaire 31 pour des raisons de tenues mécaniques. Le plot de friction est dans cet exemple un sous-ensemble formé de deux couches de matériau distincts, le clinquant intercalaire 31 étant réalisé généralement en acier.

Comme illustré sur les figures 1 et 2, les plots de friction 30 adaptés à coopérer avec la face de friction du plateau de pression du mécanisme d'embrayage sont fixés sur les pales de progressivité 20 et les plots de friction adaptés à coopérer avec la face de friction du volant d'inertie d'un système de transmission sont fixés sur les zones de coopération 14 du voile de support.

Les plots de friction 30 sont disposés circonférentiellement sur les deux faces du voile de support 11 et répartis sur la partie externe 13. Sur la face du voile de support orientée en direction du mécanisme d'embrayage, chacun des plots de friction est fixé par deux pales de progressivité adjacentes et chaque plot de friction recouvre la zone de coopération 14 du voile de support située entre les deux pales de progressivité 20.

Sur l'autre face du voile de support orientée en direction du volant d'inertie, chacun des plots de friction est fixé par deux zones de coopération 14 adjacentes du voile de support 11 et chaque plot de friction recouvre la pale de progressivité située entre les deux zones de coopération. Ainsi, chacun des plots de friction d'une même face de frottement recouvre angulairement et partiellement deux plots de friction de la face de frottement opposée. Les plots de friction 30 des deux faces de frottement sont décalés de 45°.

En variante non représentée, le plot de friction peut être collé sur un premier clinquant intercalaire et un deuxième clinquant intercalaire. Les clinquants d'un même plot sont alors distincts. Le premier clinquant est en appui sur une première pale de progressivité et le deuxième clinquant est en appui sur une deuxième pale de progressivité.

Le clinquant intercalaire 31 comprend des trous 32 de passage de rivets de fixation du plot sur le voile du support et le plot de friction 30 associé comprend des lumières 33 agencées pour le passage des rivets de fixation. Les lumières 33 du plot de friction sont de formes oblongues.

Chacune des pales de progressivité comprend une zone de support 22 plane décalée axialement par rapport à la partie centrale 12 du voile de support 11. La zone de support 22 comprend quatre orifices 23, deux des orifices 23 étant dédiés à la fixation d'un premier plot de friction, les deux autres orifices 23 étant dédiés à la fixation d'un deuxième plot de friction.

Dans le mode de mise en oeuvre illustré par les figures 1 à 5, les pales de progressivité 20 sont solidarisées et fixées sur le voile de support 11 par au moins une de leurs extrémités au moyen de rivets 8. Sur ces pales de progressivité sont ménagés au moins deux plis 24a, 24b de matière délimitant la zone de support 22 qui est conjointe à deux plots de friction. Les deux plis 24a, 24b de matière s'étendent dans une direction orthoradiale par rapport à l'axe diamétral X du voile de support 11 de telle sorte que, sous contraintes d'appui, les plis s'écrasent de façon isostatique. La direction orthoradiale peut être définie comme étant orthogonale à l'axe de rotation X et, notamment, perpendiculaire au rayon d'implantation des pales 20 sur le voile 11.

Les pales de progressivité sont réalisées en tôle d'acier, les plis 24a, 24b étant perpendiculaires au sens de laminage de la tôle. De préférence, les plis d'une même pale sont parallèles entre eux.

Une fois les pales de progressivité 20 rivetées au voile de support 11, la zone de support 22 se trouve surélevée de la hauteur des plis 24a, 24b par rapport au plan du voile de support 11 formé par la partie centrale 12. La raideur globale du dispositif de progressivité 10 est améliorée en raison de la présence d'un grand nombre de plis.

Dans cet exemple, les plis 24a, 24b ont une même largeur et même hauteur et s'étende de façon symétrique de part et d'autre de l'axe diamétral du voile de support.

Le voile de support présente également des échancrures 25 dans les secteurs angulaires situés sous la zone de support 22 des pales de progressivité. Les échancrures 25 ménagent un logement axial pour les rivets 8 de fixation des pales et limitent l'inertie globale du dispositif de progressivité 10.

Les pales de progressivité 20 sont de forme sensiblement rectangulaire avec une extrémité plane 26 à bord droit et une extrémité libre 21. Les pales de progressivité 20 sont fixées sur la zone de coopération du voile de support 11 par au moins une de ces extrémités et, de préférence, par l'extrémité droite 26, comme illustré par la figure 5. L'extrémité libre 21 se termine par une spatule 28 qui est laissée libre pour venir coiffer la partie externe 13 du voile de support 11.

L'extrémité plane 26 à bord droit des pales de progressivité 20 est adjacente à l'un des deux plis 24a, 24b.

Selon un aspect de l'invention, les deux plis 24a, 24b forment des cambrages identiques. Les plis sont inclinés avec un angle compris entre 1° et 20° par rapport au plan perpendiculaire à l'axe central X. L'inclinaison des plis assure une élévation comprise entre 0,5 et 1,5 mm et de préférence de 0,9 mm de la zone de support 22 par rapport à la partie centrale 12 du voile de support 11.

La géométrie et le profil des plis sont définis de telle sorte que les contraintes mécaniques générées dans les pales restent dans le domaine élastique de son matériau constitutif.

En conséquence, lors de la phase de ré-embrayage, lorsqu'au moins l'une des faces de frottement se trouve soumise à des contraintes d'appui, celles-ci sont transmises à la zone de support 22 et aux plis 24a, 24b qui se déforment alors de façon contrôlée.

Plus précisément, les deux plis s'écrasent dans le même sens, de manière identique et simultanée sur toutes les pales 20, à la manière de charnières, en provoquant un décalage angulaire tangentiel des plots de friction dont les faces de friction restent toutefois dans des plans parallèles, comme illustré par la figures 1. De cette façon, les plis s'écrasent de façon isostatique.

Cette déformation sélective des plis 24a, 24b de la zone de support 22 permet un pivotement libre des plots de friction 30 de la face de frottement orientée en direction du mécanisme d'embrayage autour de l'axe de rotation X relativement à la face de frottement orientée en direction du volant d'inertie.

Les plots de friction restent ainsi dans un plan perpendiculaire à l'axe X.

On va maintenant décrire en référence aux figures 6 et 7, un disque d'embrayage à friction 1 intégrant le dispositif de progressivité 10 selon un deuxième mode de mise en oeuvre de l'invention dans lequel les pales de progressivité 20a sont issues de matière avec le voile de support 11a à partir de zones de coopération 14a.

Le disque d'embrayage à friction présente, dans le cas présent, une architecture dites « dissymétrique » dans laquelle le dispositif de progressivité 10 est rapporté sur l'une des rondelles de guidage 4. Le dispositif de progressivité est disposé à l'extérieur de l'amortisseur de vibration torsionnelle 2.

Le couple moteur entre dans le disque d'embrayage par l'intermédiaire du dispositif de progressivité 10, traverse les rondelles de guidage 4, puis les ressorts hélicoïdaux de compression 5 et ressort finalement par un moyen central 6 raccordé fixement au voile de transmission de couple 3.

Le moyeu central 6 est monté sur l'arbre mené de la boîte de vitesse (non représenté) et transmet le couple moteur par des cannelures 7 formées sur l'alésage intérieur du voile de transmission de couple 3. Dans le cas présent, le moyeu central 6 et le voile de transmission de couple 3 forment une seule et même pièce.

Comme illustré sur les figures 6 et 7, le dispositif de progressivité 10 comprend, selon ce deuxième mode de mise en oeuvre de l'invention, un voile de support 11a d'axe de rotation central X porté par une des deux rondelles de guidage 4, des pales de progressivité 20a et des plots de friction 30 répartis angulairement sur le pourtour du voile de transmission de couple 3 selon l'axe X.

Le voile de support 11a comprend une partie centrale 12a annulaire adaptée à coopérer avec l'amortisseur de vibration torsionnelle 2 et une partie externe 13a portant les pales de progressivité 20a. Les pales de progressivité 20a sont issues de matière avec le voile de support 11a.

Le voile de support 11a comprend des échancrures 18 qui entourent les ressorts hélicoïdaux de compression 5. Les échancrures 18 sont formées sur l'alésage intérieur de la partie centrale 12a. Le voile de support 11a est fixé sur la rondelle de guidage 4 à l'aide de rivets (non représentés), les rivets étant insérés dans des trous 19 formés sur la partie centrale 12a et disposés angulairement entre les échancrures 18.

Dans le mode de mise en oeuvre illustré par les figures 6 et 7, la pale de progressivité 20a comprend sur son extrémité libre 21a une zone de support 22a.

Chacune des pales de progressivité s'étend circonférentiellement depuis une zone de coopération 14a du voile de support 11a. La zone de coopération correspond à une partie du voile de support définie par une surface de forme sensiblement rectangulaire. Comme cela est illustré sur la figure 7, les zones de coopération 14a sont situées sur la partie externe 13a du voile de support 11a. On retrouve sur le voile de support 11a, autant de zones de coopération 14a que de pales de progressivité 20a.

La liaison de la pale de progressivité avec la zone de coopération se fait selon un pli 24 s'étendant radialement jusqu'au diamètre extérieur Db de la partie externe 13a, le pli étant situé circonférentiellement entre la zone de support 22a et la zone de coopération 14a.

De préférence, le pli 24 s'étend dans une direction orthoradiale par rapport à l'axe central X du voile de telle sorte que, sous contraintes d'appui, le pli 24 s'écrase de façon isostatique.

De manière similaire au premier mode de mise en oeuvre de l'invention, la zone de support 22a est conjointe à deux plots de friction 30.

Les plots de friction 30 sont disposés circonférentiellement sur les deux faces du voile de support 11a et répartis sur la partie externe 13a. Sur la face du voile de support orientée en direction du mécanisme d'embrayage, chacun des plots de friction est fixé par deux pales de progressivité adjacentes et chaque plot de friction recouvre la zone de coopération 14a du voile de support 11a située entre les deux pales de progressivité 20a.

Avantageusement, la zone de support 22a est plane et comprend quatre orifices 23a, deux des orifices 23a étant dédiés à un premier plot de friction, les deux autres orifices 23a étant dédiés à un deuxième plot de friction, de sorte que la planéité de la face de frottement soit améliorée.

La zone de coopération 14a comprend également un pliage additionnel 29 s'étendant circonférentiellement dans le sens inverse de la pale de progressivité 20a, de sorte que la raideur globale du dispositif de progressivité soit diminuée.

On va maintenant décrire en référence à la figure 8, un disque d'embrayage à friction 1 intégrant le dispositif de progressivité 10 selon un troisième mode de mise en oeuvre de l'invention sensiblement similaire au deuxième mode de mise en oeuvre à l'exception du fait que les plots de friction 30 sont fixés ensemble sur une tôle annulaire 40. La tôle annulaire 40 supporte les plots de friction 30 via les tôles intercalaires 31 et vient en appui directement sur les zones de support 22a planes des pales de progressivité 20a.

Le dispositif de progressivité 10 peut comporter une tôle annulaire 40 sur chacune des deux faces du voile de support, la tenue à la centrifugation du dispositif de progressivité est ainsi améliorée.

La figure 9 présente un quatrième mode de mise en oeuvre du dispositif de progressivité 10 selon l'invention. Ce quatrième mode de mise en oeuvre diffère de celui exposé en référence à la figure 1 en ce que l'extrémité libre 21 de la pale de progressivité est retenue axialement par rapport au voile de support 11 par l'intermédiaire d'un moyen de retenue 50 lorsque le dispositif de progressivité est libéré de tout effort axial de compression.

Le moyen de retenue 50 comprend un rivet épaulé 51 fixé sur le voile de support 11 coopérant avec l'extrémité libre 21 d'une première pale de progressivité, la première pale de progressivité venant en appui sur l'épaulement du rivet 51 lorsque le dispositif de progressivité est libéré de tout effort axial de compression.

La figure 10 présente un cinquième mode de mise en oeuvre du dispositif de progressivité 10 selon l'invention. Ce cinquième mode de mise en oeuvre diffère de celui exposé en référence à la figure 9 en ce que le rivet épaulé 51 fixe directement une deuxième pale de progressivité sur le voile de support 11, la deuxième pale de progressivité étant adjacente à la première pale de progressivité.

Ainsi, simultanément, le rivet épaulé 51 fixe la deuxième pale de progressivité sur le voile de support 11 et maintient axialement l'extrémité libre 21 d'une première pale de progressivité, la première pale de progressivité venant en appui sur l'épaulement du rivet 51 lorsque le dispositif de progressivité est libéré de tout effort axial de compression.

La figure 11 présente un sixième mode de mise en oeuvre du dispositif de progressivité 10 selon l'invention. Ce sixième mode de mise en oeuvre diffère de celui exposé en référence à la figure 1 en ce que le moyen de retenue 50 est formé par la coopération de deux pales de progressivité 20.

Le moyen de retenue 50 comprend une patte 52 repliée formée depuis une première pale de progressivité et qui recouvre axialement une deuxième pale de progressivité, l'extrémité libre 21 de la deuxième pale de progressivité venant en appui sur la patte 52 repliée de la première pale de progressivité lorsque le dispositif de progressivité est libéré de tout effort axial de compression.

La figure 12 présente un septième mode de mise en oeuvre du dispositif de progressivité 10 selon l'invention. Ce septième mode de mise en oeuvre diffère de celui exposé en référence à la figure 1 en ce que le moyen de retenue 50 est formé par directement par la pale de progressivité 20.

Le moyen de retenue 50 comprend une patte 53 repliée depuis l'extrémité libre 21 de la pale de progressivité 20 et introduite dans une ouverture 54 aménagée dans le voile de support 11. La patte 53 repliée vient en appui sur le voile de support lorsque le dispositif de progressivité est libéré de tout effort axial de compression.

L'invention n'est pas limitée aux exemples de réalisation qui viennent d'être décrit.

## Revendications

1. Dispositif de progressivité (10) pour un disque d'embrayage à friction, comprenant :
un voile de support (11, 11a) à axe central de rotation (X) dans lequel une partie centrale (12, 12a) annulaire est adaptée à coopérer avec un amortisseur de vibration torsionnelle (2) et une partie externe (13, 13a) porte des pales de progressivité (20, 20a), lesdites pales de progressivité s'étendant circonférentiellement entre une zone de coopération (14, 14a) de la partie externe du voile de support et une extrémité libre (21, 21a),
et des plots de friction (30) disposés circonférentiellement sur les deux faces du voile de support (11, 11a), répartis sur la partie externe du voile de support, chaque plot de friction ayant une forme de segment angulaire,
**caractérisé en ce que**, sur une des faces du voile de support, chacun des plots de friction (30) est fixé par deux pales de progressivité adjacentes et chaque plot de friction recouvre la zone de coopération (14, 14a) du voile de support située entre les deux pales de progressivité (20, 20a).

2. Dispositif de progressivité (10) selon la revendication 1, **caractérisé en ce que**, sur l'autre face du voile de support, chacun des plots de friction (30) est fixé par deux zones de coopération (14, 14a) adjacentes du voile de support (11, 11a) et chaque plot de friction recouvre la pale de progressivité (20, 20a) située entre les deux zones de coopération (14, 14a).

3. Dispositif de progressivité (10) selon la revendication 1 ou 2, **caractérisé en ce que** la zone de coopération (14, 14a) s'étend radialement depuis la partie centrale (12, 12a) annulaire jusqu'à la partie externe (13, 13a) du voile de support.

4. Dispositif de progressivité (10) selon l'une des revendications 1 à 3, **caractérisé en ce que** les zones de coopération (14, 14a) sont planes et situées dans le même plan que la partie centrale (12, 12a) du voile de support.

5. Dispositif de progressivité (10) selon l'une des revendications 1 à 4, **caractérisé en ce que** chacune des pales de progressivité (20, 20a) comprend une zone de support (22, 22a) plane décalée axialement par rapport à la partie centrale (12, 12a) du voile de support et la zone de support (22, 22a) comprend des orifices (23), une partie des orifices (23) étant dédiés à la fixation d'un premier plot de friction, l'autre partie des orifices (23) étant dédiés à la fixation d'un deuxième plot de friction.

6. Dispositif de progressivité (10) selon l'une des revendications 1 à 5, **caractérisé en ce que** les pales de progressivité (20a) sont issues de matière avec le voile de support (11a) à partir de la zone de coopération (14a).

7. Dispositif de progressivité (10) selon la revendication précédente, **caractérisé en ce que** la pale de progressivité (20a) comprend sur son extrémité libre (21a) une zone de support (22a) conjointe à deux plots de friction.

8. Dispositif de progressivité (10) selon la revendication précédente, **caractérisé en ce que** la liaison de la pale de progressivité (20a) avec la zone de coopération (14a) se fait selon un pli (24) s'étendant radialement jusqu'au diamètre extérieur (Db) de la partie externe, le pli (24) étant situé circonférentiellement entre la zone de support (22a) et la zone de coopération (14a).

9. Dispositif de progressivité (10) selon la revendication précédente, **caractérisé en ce que** le pli (24) s'étend dans une direction orthoradiale par rapport à l'axe central (X) du voile de support (11a) de telle sorte que, sous contraintes d'appui, le pli (24) s'écrase de façon isostatique.

10. Dispositif de progressivité (10) selon l'une des revendications 1 à 5, **caractérisé en ce que** les pales de progressivité (20) sont rapportées et rivetées sur le voile de support (11) au niveau de la zone de coopération (14).

11. Dispositif de progressivité (10) selon la revendication précédente, **caractérisé en ce que** la pale de progressivité (20) comprend au moins deux plis (24a, 24b) de matière délimitant une zone de support (22) conjointe à deux plots de friction (30), les deux plis (24a, 24b) s'étendant dans une direction orthoradiale par rapport à l'axe central (X) du voile de support de telle sorte que, sous contraintes d'appui, les plis s'écrasent de façon isostatique.

12. Dispositif de progressivité (10) selon la revendication précédente, **caractérisé en ce que** les plis (24a, 24b) d'une même pale de progressivité (20) sont parallèles entre eux et ont une même raideur axiale.

13. Dispositif de progressivité (10) selon l'une quelconque des revendications précédentes, **caractérisé en ce que** l'extrémité libre (21, 21a) de la pale de progressivité (20, 20a) est retenue axialement par rapport au voile de support (11, 11a) par l'intermédiaire d'un moyen de retenue (50) lorsque le dispositif de progressivité est libéré de tout effort axial de compression.

14. Dispositif de progressivité (10) selon la revendication précédente, **caractérisé en ce que** le moyen de retenue (50) comprend un rivet épaulé (51) fixé sur le voile de support (11, 11a) coopérant avec l'extrémité libre (21, 21a) d'une première pale de progressivité, la première pale de progressivité venant en appui sur l'épaulement du rivet (51) lorsque le dispositif de progressivité est libéré de tout effort axial de compression.

15. Disque d'embrayage à friction (1) pour véhicule automobile, comprenant un voile de transmission de couple (3), deux rondelles de guidage (4) disposées de part et d'autre dudit voile de transmission de couple (3), des ressorts hélicoïdaux de compression (5) en appui sur le voile de transmission de couple et les rondelles de guidage, et un dispositif de progressivité (10) selon l'une quelconque des revendications précédentes, dans lequel le voile de support (11, 11a) est porté par le voile de transmission de couple (3) ou par l'une des deux rondelles de guidage (4).

## Patentansprüche

1. Progressivitätsvorrichtung (10) für eine Reibkupplungsscheibe, umfassend:
eine Stützscheibe (11, 11a) mit zentraler Drehachse (X), wobei ein ringförmiger Mittelteil (12, 12a) mit einem Torsionsschwingungsdämpfer (2) zusammenwirken kann und ein Außenteil (13, 13a) Progressivitätsschaufeln (20, 20a) trägt, wobei sich die Progressivitätsschaufeln in Umfangsrichtung zwischen einem Kooperationsbereich (14, 14a) des Außenteils der Stützscheibe und einem freie Ende (21, 21a) erstrecken, und Reibklötze (30), die in Umfangsrichtung auf beiden Seiten der Stützscheibe (11, 11a) angeordnet und über den Außenteil der Stützscheibe verteilt sind, wobei jeder Reibklotz eine Winkelsegmentform aufweist, **dadurch gekennzeichnet, dass** auf einer der Seiten der Stützscheibe jeder der Reibklötze (30) durch zwei benachbarte Progressivitätsschaufeln befestigt ist und jeder Reibklotz den zwischen den beiden Progressivitätsschaufeln (20, 20a) befindlichen Kooperationsbereich (14, 14a) der Stützscheibe bedeckt.

2. Progressivitätsvorrichtung (10) nach Anspruch 1, **dadurch gekennzeichnet, dass** auf der anderen Seite der Stützscheibe jeder der Reibklötze (30) durch zwei benachbarte Kooperationsbereiche (14, 14a) der Stützscheibe (11, 11a) befestigt ist und jeder Reibklotz die zwischen den beiden Kooperationsbereichen (14, 14a) liegende Progressivitätsschaufel (20, 20a) bedeckt.

3. Progressivitätsvorrichtung (10) nach Anspruch 1 oder 2, **dadurch gekennzeichnet, dass** sich der Kooperationsbereich (14, 14a) radial vom ringförmigen Mittelteil (12, 12a) zum Außenteil (13, 13a) der Stützscheibe erstreckt.

4. Progressivitätsvorrichtung (10) nach einem der Ansprüche 1 bis 3, **dadurch gekennzeichnet, dass** die Kooperationsbereiche (14, 14a) eben sind und in derselben Ebene wie der Mittelteil (12, 12a) der Stützscheibe liegen.

5. Progressivitätsvorrichtung (10) nach einem der Ansprüche 1 bis 4, **dadurch gekennzeichnet, dass** jede der Progressivitätsschaufeln (20, 20a) einen Stützbereich (22, 22a) umfasst, der in Bezug auf den Mittelteil (12, 12a) der Stützscheibe axial versetzt ist, und der Stützbereich (22, 22a) Öffnungen (23) umfasst, wobei ein Teil der Öffnungen (23) für die Befestigung eines ersten Reibklotzes vorgesehen ist und der andere Teil der Öffnungen (23) für die Befestigung eines zweiten Reibklotzes vorgesehen ist.

6. Progressivitätsvorrichtung (10) nach einem der Ansprüche 1 bis 5, **dadurch gekennzeichnet, dass** die Progressivitätsschaufeln (20a) einstückig mit der Stützscheibe (11a) vom Kooperationsbereich (14a) ausgehend ausgeführt sind.

7. Progressivitätsvorrichtung (10) nach dem vorangehenden Anspruch, **dadurch gekennzeichnet, dass** die Progressivitätsschaufel (20a) an ihrem freien Ende (21a) einen Stützbereich (22a) umfasst, der mit zwei Reibklötzen verbunden ist.

8. Progressivitätsvorrichtung (10) nach dem vorangehenden Anspruch, **dadurch gekennzeichnet, dass** die Verbindung der Progressivitätsschaufel (20a) mit dem Kooperationsbereich (14a) entlang einer Falte (24) erfolgt, die sich radial bis zum Außendurchmesser (Db) des Außenteils erstreckt, wobei sich die Falte (24) in Umfangsrichtung zwischen dem Stützbereich (22a) und dem Kooperationsbereich (14a) befindet.

9. Progressivitätsvorrichtung (10) nach dem vorangehenden Anspruch, **dadurch gekennzeichnet, dass** sich die Falte (24) in orthoradialer Richtung in Bezug auf die Mittelachse (X) der Stützscheibe (11a) so erstreckt, dass die Falte (24) unter Stützbeanspruchung isostatisch zusammenfällt.

10. Progressivitätsvorrichtung (10) nach einem der Ansprüche 1 bis 5, **dadurch gekennzeichnet, dass** die Progressivitätsschaufeln (20) im Kooperationsbereich (14) an der Stützscheibe (11) angebracht und angenietet sind.

11. Progressivitätsvorrichtung (10) nach dem vorangehenden Anspruch, **dadurch gekennzeichnet, dass** die Progressivitätsschaufel (20) mindestens zwei einstückig ausgebildete Falten (24a, 24b) umfasst, die einen Stützbereich (22) begrenzen, der mit zwei Reibklötzen (30) verbunden ist, wobei sich die beiden Falten (24a, 24b) in orthoradialer Richtung in Bezug auf die Mittelachse (X) der Stützscheibe so erstrecken, dass die Falten unter Stützbeanspruchung isostatisch zusammenfallen.

12. Progressivitätsvorrichtung (10) nach dem vorangehenden Anspruch, **dadurch gekennzeichnet, dass** die Falten (24a, 24b) einer gleichen Progressivitätsschaufel (20) parallel zueinander sind und dieselbe axiale Steifigkeit aufweisen.

13. Progressivitätsvorrichtung (10) nach einem der vorangehenden Ansprüche, **dadurch gekennzeichnet, dass** das freie Ende (21, 21a) der Progressivitätsschaufel (20, 20a) in Bezug auf die Stützscheibe (11, 11a) anhand eines Haltemittels (50) axial gehalten wird, wenn die Progressivitätsvorrichtung von jeglicher axialer Kompressionskraft befreit ist.

14. Progressivitätsvorrichtung (10) nach dem vorangehenden Anspruch, **dadurch gekennzeichnet, dass** das Haltemittel (50) einen Schulterniet (51) umfasst, der an der Stützscheibe (11, 11a) befestigt ist und mit dem freien Ende (21, 21a) einer ersten Progressivitätsschaufel zusammenwirkt, wobei die erste Progressivitätsschaufel auf der Schulter des Niets (51) aufliegt, wenn die Progressivitätsvorrichtung von jeglicher axialer Kompressionskraft befreit ist.

15. Reibkupplungsscheibe (1) für ein Kraftfahrzeug, umfassend eine Drehmomentübertragungsscheibe (3), zwei Führungsscheiben (4), die beiderseits der Drehmomentübertragungsscheibe (3) angeordnet sind, Druckschraubenfedern (5), die an der Drehmomentübertragungsscheibe und den Führungsscheiben anliegen, und eine Progressivitätsvorrichtung (10) nach einem der vorangehenden Ansprüche, wobei die Stützscheibe (11, 11a) von der Drehmomentübertragungsscheibe (3) oder von einer der beiden Führungsscheiben (4) getragen wird.

## Claims

1. Progressivity device (10) for a clutch friction disk, comprising:
a support flange (11, 11a) with a rotation central axis (X) in which an annular central part (12, 12a) is suitable for cooperating with a torsional vibration damper (2) and an external part (13, 13a) carries progressivity blades (20, 20a), said progressivity blades extending circumferentially between a cooperation area (14, 14a) of the external part of the support flange and a free end (21, 21a),
and friction pads (30) placed circumferentially on the two faces of the support flange (11, 11a), which friction pads are distributed over the external part of the support flange, each friction pad having the shape of an angular segment,
**characterized in that**, on one of the faces of the support flange, each of the friction pads (30) is fixed by two adjacent progressivity blades and each friction pad covers the support flange cooperation area (14, 14a) located between the two progressivity blades (20, 20a).

2. Progressivity device (10) according to Claim 1, **characterized in that**, on the other face of the support flange, each of the friction pads (30) is fixed by two adjacent cooperation areas (14, 14a) of the support flange (11, 11a) and each friction pad covers the progressivity blade (20, 20a) located between the two cooperation areas (14, 14a).

3. Progressivity device (10) according to Claim 1 or 2, **characterized in that** the cooperation area (14, 14a) extends radially from the annular central part (12, 12a) as far as the external part (13, 13a) of the support flange.

4. Progressivity device (10) according to one of Claims 1 to 3, **characterized in that** the cooperation areas (14, 14a) are planar and located in the same plane as the central part (12, 12a) of the support flange.

5. Progressivity device (10) according to one of Claims 1 to 4, **characterized in that** each of the progressivity blades (20, 20a) comprises a planar support area (22, 22a) axially offset with respect to the central part (12, 12a) of the support flange and the support area (22, 22a) comprises orifices (23), some of the orifices (23) being dedicated to fixing a first friction pad, the other orifices (23) being dedicated to fixing a second friction pad.

6. Progressivity device (10) according to one of Claims 1 to 5, **characterized in that** the progressivity blades (20a) are made as a single piece with the support flange (11a) starting from the cooperation area (14a).

7. Progressivity device (10) according to the preceding claim, **characterized in that** the progressivity blade (20a) comprises, on the free end (21a) thereof, a support area (22a) related to two friction pads.

8. Progressivity device (10) according to the preceding claim, **characterized in that** the progressivity blade (20a) is linked to the cooperation area (14a) along a fold (24) extending radially as far as the outer diameter (Db) of the external part, the fold (24) being located circumferentially between the support area (22a) and the cooperation area (14a).

9. Progressivity device (10) according to the preceding claim, **characterized in that** the fold (24) extends in an orthoradial direction with respect to the central axis (X) of the support flange (11a) such that, under bearing stresses, the fold (24) is squashed in an isostatic manner.

10. Progressivity device (10) according to one of Claims 1 to 5, **characterized in that** the progressivity blades (20) are attached and riveted onto the support flange (11) at the cooperation area (14).

11. Progressivity device (10) according to the preceding claim, **characterized in that** the progressivity blade (20) comprises at least two folds (24a, 24b) of material delimiting a support area (22) related to two friction pads (30), the two folds (24a, 24b) extending in an orthoradial direction with respect to the central axis (X) of the support flange such that, under bearing stresses, the folds are squashed in an isostatic manner.

12. Progressivity device (10) according to the preceding claim, **characterized in that** the folds (24a, 24b) of a same progressivity blade (20) are parallel to one another and have a same axial stiffness.

13. Progressivity device (10) according to any one of the preceding claims, **characterized in that** the free end (21, 21a) of the progressivity blade (20, 20a) is retained axially with respect to the support flange (11, 11a) by means of a retaining means (50) when the progressivity device is free from all compression axial force.

14. Progressivity device (10) according to the preceding claim, **characterized in that** the retaining means (50) comprises a shoulder rivet (51) fixed on the support flange (11, 11a) cooperating with the free end (21, 21a) of a first progressivity blade, the first progressivity blade bearing on the shoulder of the rivet (51) when the progressivity device is free from all compression axial force.

15. Clutch friction disk (1) for a motor vehicle, comprising a torque transmission flange (3), two guide washers (4) placed on either side of said torque transmission flange (3), helical compression springs (5) bearing on the torque transmission flange and the guide washers, and a progressivity device (10) according to any one of the preceding claims, wherein the support flange (11, 11a) is borne by the torque transmission flange (3) or by one of the two guide washers (4).
